# EUROPEAN PATENT APPLICATION

(11) **EP 2 189 653 A1**
(43) Date of publication of application: **26.05.2010**
(21) Application number: 08794057.3
(22) Date of filing: 07.07.2008
(51) Int. Cl.: F03D 1/04

(54) **WIND POWER PLANT**

(30) Priority: 20.08.2007 RU 2007131486
(71) Applicant: Arter Technology Limited, Guernsey GY1 4EW (GB)
(72) Inventor: OVCHINNIKOV, Alexandr Ivanovich, Bologoe Tverskaya obl. 171070 (RU)
(74) Representative: Djukic, Dusan
(86) International application number: PCT/RU2008/000440
(87) International publication number: WO 2009/031927

(57) **Abstract**

Wind-driven electric plant

Concept of invention: a wind-driven electric plant comprises an inlet shell shaped as a circle and a circular outer shell. Inside the circular shell, provision is made of a coaxially arranged turbine. Kinematically coupled with the turbine is a mechanism for the conversion of mechanical energy. The outer shell is eccentrically mounted relative to the inlet shell. A value of eccentricity is not less than 0.01 and not more than 0.24 of the dia. of a circle defining the inside surface of the outer shell in its minimal cross section. 5 claims, dependent; 4 ill.

## Description

The invention relates to power engineering, specifically wind-driven electric plants for the conversion of wind energy into electric or any other energy and can be used in the industry, agriculture and other branches of the economy.

Known is a wind-driven electric plant comprising a circular annular inlet shell, a turbine arranged in a coaxial relation within the inlet shell and a mechanism kinematically coupled with the turbine to convert mechanical energy (cf. patent US No 4218 175, cl. F03D 1/04, published 19.08.1980).

The known plant is disadvantageous in nonuniform effects an air flow produces on turbine blades, which fact causes variable g-loads leading to instability of the parameters of an electric current generated by a mechanism for converting mechanical energy and also a relatively low efficiency of the plant because of the incomplete utilization of the energy of the air flow.

The closest as to technical essence and attainable technical result is a wind-driven electric plant including an annular inlet shell, a turbine coaxially arranged within the inlet shell, a mechanism kinematically coupled with the turbine to convert mechanical energy, and an outer shell shaped as a circle (cf. patent RF No 2261362, cl. F03D 1/04. published 10.02.2005).

The construction of a known plant partially removes the defects of a wind-driven electric plant, as described hereinabove, on account of mounting a circular outer shell performing the functions of an ejector, which increases the speed of an air flow on a turbine and, consequently, raising the efficiency of the wind-driven electric plant. The defects of the known device selected as a most pertinent prior art solution can be a relatively low reliability of its operation. As is known, the wind-driven electric plant performs well in a specified range of speeds of the air flow. With the speed of the air flow (gusts of wind) increased above a calculated range, there is accordingly increased the energy of the air flow entering an inlet shell and also a discharge built up by the outer shell, which fact will give rise to an increased speed of rotation of the turbine above the computed value. The increase of the speed of rotation of said turbine will result in the increased velocity of a mechanism kinematically coupled therewith to convert mechanical energy. Thus, said elements of the construction of the device will work under increased loads, which will lower reliability of operation of the device as a whole. And be it noted that variable g-loads appearing with the increased speed of the air flow in excess of a design range will result in instability of energy parameters (electric current, for example) produced by the mechanical energy conversion mechanism.

The invention is directed to tackling a task of creating a wind-driven electric plant for ensuring its reliable operation and maintaining stability of the parameters of the energy produced by way of protecting a device from a sharp increase of the speed of an air flow by automatically regulating an amount of energy supplied to a turbine. The technical result attainable in realization of the invention consists in stabilizing the speed of rotation of the turbine owing to reducing the degree of discharging past the turbine, with the speed of the air flow increased above the computed value.

The task set is solved owing to the fact that in a wind-driven electric plant comprising a circular inlet shell, a turbine coaxially arranged within the inlet shell, a mechanism kinematically coupled with the turbine to convert mechanical energy and a circular outer shell mounted eccentrically of the inlet shell, an eccentricity being not less than 0.01 and not more than 0.24 of the dia. of a circle defining the inside surface of the outer shell in its minimal cross section.

Besides, the task set is solved owing to the fact that an outer shell is mounted with a faculty of limited movement and fixation in intermediate positions with respect to an inlet shell in a plane perpendicular to the longitudinal axis of symmetry of the inlet shell.

Besides, the task set is solved owing to the fact that it is implemented with a mechanism for changing the eccentricity of an outer shell with respect to an inlet shell.

Besides, the task set is solved owing to the fact that at least part of the outside surface of an inlet shell and/or outer shell is formed by the lateral surface of a cylinder of rotation.

Besides, the task set is solved owing to the fact that at least part of the inside surface of an inlet shell and/or outer shell is formed by the lateral surface of a cone of rotation.

Besides, the task set is solved owing to the fact that at least part of the inside surface of an inlet shell and/or outer shell is formed by the lateral surface of a cylinder of rotation.

The invention will now be described in detail with reference to the drawings illustrating a specific embodiment thereof, in which Fig. 1 shows a wind-driven electric plant; Fig. 2 - view along arrow A in Fig. 1; Fig. 3 - alternative structural embodiment of a wind-driven electric plant; Fig. 4 - mechanism for changing the eccentricity of an outer shell with respect to an inlet shell.

A wind-driven electric plant comprises a circular inlet shell I being streamlined in cross section, in the form of a wing, for example. Inside the inlet shell I at least one turbine 2 is disposed in a coaxial relation, i.e. the longitudinally extending axis of symmetry of the turbine 2 is arranged on a longitudinal axis 3 of symmetry of the inlet shell I. A cowl 4 can be positioned upstream of the turbine 2 and securely fastened by means of cantilivers (not shown) on the inlet shell I. The turbine 2 is kinematically coupled with a mechanism 5 for mechanical energy conversion and can be installed on a support (not shown) in the form of a column, for example, to be fixed on the ground or a base to be fixed on a vehicle. The turbine 2 can be pivotally connected with the support to turn a device downwind in any direction. The mechanical energy conversion mechanism 5 can be configured and designed as an electric current generator, for example, a hydraulic pump or a compressor. The kinematic coupling of the turbine 2 with said mechanism 5 can be executed, for example, as a belt drive, a propeller shaft or a gear transmission. The mechanism 5 can be disposed in a central body 6. The inlet shell I is connected by means of cantilivers 7, for example, with an outer shell 8 shaped as a circle. The outer shell 8 in cross section can be streamlined, shaped as a wing, for example. The device can be implemented with a wind vane surface (not shown) disposed on the outer shell 8 or central body 6 to facilitate orientation of the plant downwind. The outer shell 8 is provided eccentrically (E) of the inlet shell I, i.e. a longitudinal axis 9 of symmetry of the outer shell 8 extends parallel to the longitudinal axis 3 of the inlet shell I and is offset with respect to the latter (distance E). And the following condition is observed: a value of eccentricity (E) is not less than 0.01 and not more than 0.24 of the dia. (D) of a circle defining an inside surface 10 of the outer shell 8 in its minimal cross section, i.e. 0.01 ≤ D ≤≤ 0.24 D. Said relation between the geometric parameters of the device was obtained experimentally at the time of investigations carried out on an aerodynamic stand. A lower limit of said range of relations between the geometric parameters of the device defines the value of the eccentricity, with the proviso that a maximal excess of the speed of an air flow of its computed value is about 25%. With said value of the eccentricity departing from the limits of a lower value of said range the displacement of the outer shell 8 with respect to the inlet shell I creates a local resistance to the air flow at an inlet of the outer shell 8 that produces a negative effect on the operation of the plant and reduces the efficiency of the wind-driven electric plant with the rated speeds of the air flow. An upper limit of said range of relationships between the geometric parameters of the device determines the value of the eccentricity providing the maximum excess of the speed of the air flow of its computed value is about 200%. With the values of the eccentricity going beyond an upper value of said range, the displacement of the outer shell 8 with respect to the inlet shell I does not practically create a local resistance to the air flow at an inlet of the outer shell and, consequently, the speed of rotation of a turbine is not reduced owing to the reduced degree of a discharge downstream of the turbine. The concrete value of the eccentricity from the claimed range of its values is selected with due regard for statistic data on the velocities of the air flow in the given region, the geometric characteristics of the plant and other parameters.

One of the variants of the structural embodiment of a plant provides for the outer shell 8 being mounted with a capability of limited movement and fixation in intermediate positions with respect to the inlet shell I in a plane perpendicular to the longitudinal axis 3 of symmetry of the inlet shell. Said movement can be carried out, for example, by making the cantilevers 7 telescopic (Fig. 4), i.e. being comprised of two parts with freedom to move lengthwise. For said parts of the cantilevers 7 to be fixed with respect of each other in an intermediate position, they may have openings 11 to arrange a stopper (not shown). For the compensation of a change in the spacing of the outer shell 8 with respect to the inlet shell 1, the cantilevers 7 can be rotatably mounted in a plane perpendicular to the longitudinal axis of symmetry 3 of the inlet shell I, for which purpose the ends of the parts of each and every cantilever 7 can be pivotally connected to the corresponding shell (not shown).

Another variant of structural embodiment of a wind-driven electric plant provides for its execution with a mechanism for changing the eccentricity (E) of the outer shell 8 with respect to the inlet shell I (not shown). Said mechanism may be any conventional mechanism making two members move relative to one another. For example, the eccentricity (E) change mechanism of the outer shell 8 with respect to the inlet shell I can be configured and designed in the form of a hydraulic cylinder or pneumatic cylinder accommodated in at least one cantilever 7 whose body is securely fastened on the inlet shell I or the outer shell 8 and a rod - on the outer shell 8 or inlet shell I, respectively.

One of the variants of the structural embodiment of a wind-driven electric plant provides for at least a portion of an outside surface 12 (Fig. 3) of the inlet shell 1 and/or part of an outside surface 13 of the outer shell 8 being defined by the lateral surface of a cylinder of rotation.

Another variant of the structural embodiment of a device provides for at least a portion of an inside surface 14 of the inlet shell I and/or at least an inside surface 10 of the outer shell 8 being formed by the lateral surface of a cone of revolution.

At least a portion of the inside surface 14 of the inlet shell 1 and/or at least a portion of the inside surface 10 of the outer shell 8 can be formed by the lateral surface of a cylinder of revolution (not shown).

A wind-driven electric plant is operated in the following manner.

An air flow moving along the longitudinal axis of symmetry 3 of a plant oriented downwind with the aid of a wind vane surface strikes the turbine 2 via the inlet shell I thereby to make it rotate. Inasmuch as the turbine 2 is kinematically coupled with the mechanical energy conversion mechanism 5, then the latter also starts working to convert said air flow energy into a kind of energy as required. At the same time, the air flow moves along the inside surface 10 and the outside surface 13 of the outer shell 8 to create a discharge by ejection in the rear part of the plant downstream of the turbine 2. The air flow reaches maximum speed when acted upon by two energy fluxes from the side of the inlet section of the inlet shell I and from the side of the outlet section of the outer shell 8, which fact facilitates maximum energy take-off from the air flow.

Be it noted that the inlet section of the outer shell 8 is shaped as a circle, with its width diminishing on one of the parts. The reduced width of the inlet section of the outer shell 8 is necessitated by the arrangement of the outer shell 8 eccentrically (E) of the inlet shell 1. A value of (E) is selected such that given the rated speed of an air flow, the reduction of a width of the inlet section of the outer shell 8 does not produce effects on the efficacy of the air flow involved in creating a discharge, i.e. a wind-driven electric plant will perform in the operating conditions of the maximum energy take-off of the air flow.

With the speed of an air flow rising above the computed value (strong gusts of wind), the amount of an energy flux coming to the turbine 2 via the inlet shell I is increased. And the amount of a second energy flux entering from the side of the outlet section of the outer shell 8 will decline. Said decline of the efficiency of the air flow involved in creating a discharge is caused by the fact that with the increased speed of the air flow coming into the outer shell 8 above the computed value, reduction in area of the inlet section of the outer shell 8 performs functions of a local resistance which lowers a rate of passage of the air flow via the outer shell 8, said reduced rate of passage of said air flow via the outer shell 8 lowers the efficiency of effects said flow produces on creation of the discharge. Thus, as the speed of the air flow is increased above the computed value, the energy flux is increased that is admitted to the turbine 2 from the side of the inlet shell while the energy flux coming to the turbine 2 from the side of the outlet section of the outer shell 8 is decreased. And the amount of the total energy flux supplied to the turbine 2 remains substantially invariable both with a rated speed of the air flow and a considerable increase in the speed of the air flow. Be it also noted that at the time of a further increase in the speed of the air flow (wind), the area of a local resistance to the air flow coming to the outer shell 8 will increase, i.e. the rate of passage of the air flow via the outer shell 8 will be reduced further. As the speed of the air flow is further reduced up to the computed value, a back redistribution of the energy fluxes supplied to the turbine takes place, i.e. the amount of energy supplied to the turbine 2 via the inlet shell I will be diminished and a portion of energy supplied to the turbine 2 by the ejection of the air flow, using the outer shell 8, will be increased. Thus, given the reduced speed of the air flow up to its computed value, the area of local resistance to the air flow will be diminishing until the displacement (E) of the outer shell 8 with respect to the inlet shell I exerts no influence on the air flow (with the rated speed of the air flow) altogether. During a change in the speed of the air flow, energy fluxes coming to the turbine 2 are regulated automatically due to their redistribution, which allows the stable speed of rotation of the output shaft of the turbine 2 regardless of a change in environmental conditions (gusts of wind). Stability of the speed of rotation of the turbine in operation reduces a value of peak loads on the parts of a device thereby to enhance reliability and useful life of the device as a whole.

For example, if the rated speed of wind in a particular climatic condition is 6-7 m/s and the dia. (D) of a circle defining the inside surface 10 of the outer shell 8 in its minimal cross section is selected 3.0 m, the value of an eccentricity (E) of the outer shell 8 with respect to the inlet shell I should be not less than 0.03 m and not more than 0.72 m. The concrete value of (E) from a certain range is selected in relation to the value of maximum wind speeds characteristic of the particular climatic region. For example, with the aforesaid parameters, if the maximum speed of an air flow is 9.0 m/s, the value of (E) should be about 0.05 m and if the maximum speed of an air flow is 14.0 m/s, the value of (E) should be about 0.65 m.

## Claims

1. A wind-driven electric plant including an inlet shell shaped as a circle, a turbine coaxially arranged within the inlet shell, a mechanism for the conversion of mechanical energy, kinematically coupled with the turbine, and an outer shell shaped as a circle, **characterized in that** the outer shell is mounted eccentrically of the inlet shell, a value of eccentricity being not less than 0.01 and not more than 0.24 of the dia. of a circle, defining the inside surface of the outer shell in a minimum cross section thereof.

2. The wind-driven electric plant of claim 1, **characterized in that** the outer shell is mounted with a faculty of limited movement and fixation in intermediate positions with respect to the inlet shell in a plane perpendicular to a longitudinally extending axis of symmetry of the inlet shell.

3. The wind-driven electric plant of claim 1, **characterized in that** it is executed with a mechanism for changing an eccentricity of the outer shell with respect to the inlet shell.

4. The wind-driven electric plant of claim 1, **characterized in that** at least a portion of the outside surface of the inlet shell and/or outer shell is formed by the lateral surface of a cylinder of rotation.

5. The wind-driven electric plant of claim 1, **characterized in that** at least a portion of the inside surface of the inlet shell and/or outer shell is formed by the lateral surface of a cone of rotation.

6. The wind-driven electric plant of claim 1, **characterized in that** at least a portion of the inside surface of the inlet shell and/or outer shell is formed by the lateral surface of a cylinder of rotation.
